Europäisches Patentamt

European Patent Office

Office européen des brevets

(11) Veröffentlichungsnummer: **0 065 071**
**A1**

## (12) EUROPÄISCHE PATENTANMELDUNG

(21) Anmeldenummer: 82101082.4

(22) Anmeldetag: 13.02.82

(51) Int. Cl.³: **G 05 D 23/19, F 24 D 19/10**

(30) Priorität: 06.05.81 DE 3117789

(43) Veröffentlichungstag der Anmeldung: 24.11.82
Patentblatt 82/47

(84) Benannte Vertragsstaaten: **AT DE FR GB IT**

(71) Anmelder: **ROBERT BOSCH GMBH, Postfach 50, D-7000 Stuttgart 1 (DE)**

(72) Erfinder: **Fauser, Edwin, Ing. grad., J.-Kerner-Strasse 8, D-7257 Ditzingen (DE)**
Erfinder: **Hilscher, Helmut, Dipl.-Ing., Fraubronnstrasse 22, D-7000 Stuttgart 70 (DE)**
Erfinder: **Schirmer, Günter, Ing. grad., Kettenweg 13, D-7121 Ingersheim (DE)**
Erfinder: **Witzki, Erwin, Ing.(grad.), Römerstrasse 5, D-7441 Neckartenzlingen (DE)**

(54) **Verfahren zum Regeln bzw. Steuern einer Heizungsanlage.**

(57) Es wird ein Verfahren zum Regeln bzw. Steuern einer Heizungsanlage vorgeschlagen, bei welchem zum Zweck der Energieeinsparung die Wärmezufuhr gedrosselt wird, wenn eine Störung der Anlage festgestellt wird. Zur Feststellung der Störung wird beim Einschalten der Anlage und/oder wenn im normalen Heizbetrieb die Raumtemperatur den Sollwert unterschreitet, ein Zeitsignal ($Z_1$ bis $Z_4$) gesetzt, bei dessen Ablauf eine Abfrage erfolgt, ob die Raumtemperatur (T) einen vorgegebenen Mindestwert erreicht hat bzw. sich in einem vorgegebenen Maß an die Solltemperatur angenähert hat. Das Ergebnis dieser Anfrage wird dann entsprechend dem genannten Zweck ausgewertet. Dieses Verfahren hat den Vorteil, daß kurzzeitige Störungen, die beispielsweise durch gezieltes Lüften der Räume bedingt sind, nicht zu einer unerwünschten Drosselung der Wärmezufuhr führen.

R. 6944
23.3.1981 Ki/Le

ROBERT BOSCH GMBH, 7000 STUTTGART 1

Verfahren zum Regeln bzw. Steuern einer Heizungsanlage

Stand der Technik

Die Erfindung geht aus von einem Verfahren nach der Gattung
des Hauptanspruchs. Bei den bekannten Verfahren dieser Gattung
wird zum Zweck der Energieeinsparung die Raumtemperatur während
der Nacht oder auch am Tage, wenn sich in dem oder den beheizten
Räumen keine Personen aufhalten, auf den zweiten Sollwert abgesenkt. Die Absenkung erfolgt entweder durch ein programmiertes
Zeitschaltwerk oder durch den Benutzer der Anlage über einen Schalter
von Hand. Mit diesen bekannten Maßnahmen kann der Energieverbrauch einer Heizungsanlage bereits merklich gesenkt werden.
Nachteilig ist jedoch, daß durch Unachtsamkeiten, wie unkontrolliertes Lüften oder Abstellen der Heizkörper im Testraum, die Heizanlage in einen Betriebszustand kommen kann, in
welchem hohe Energieverluste entstehen.

Vorteile der Erfindung

Das erfindungsgemäße Verfahren mit den kennzeichnenden Merkmalen
des Hauptanspruchs hat demgegenüber den Vorteil, daß eine aufgetretene Störung in der Anlage bzw. ein durch geöffnete Fenster
und Türen bedingter Temperatureinbruch in angemessener Zeit
selbsttätig erkannt wird und daß durch die danach selbsttätig
vorgenommene Drosselung der Wärmezufuhr die Energieverluste
möglichst gering gehalten werden.

...

Durch die in den Unteransprüchen aufgeführten Maßnahmen sind
vorteilhafte Weiterbildungen des im Hauptanspruch angegebenen
Verfahrens möglich.

Bei Anlagen, bei denen Mittel zum Regeln bzw. Steuern der Raumtemperatur auf einen zweiten Sollwert vorgesehen sind, welcher
niedriger als der erste Sollwert ist, wird ein Verfahren gemäß den Merkmalen des Anspruchs 2 vorgeschlagen. Dadurch ist
erreicht, daß zur Steuerung der im Störungsfall verringerten
Wärmezufuhr die zur Steuerung bzw. Regelung des zweiten Sollwertes bereits vorgesehenen Mittel verwendet werden können.

Bei diesen bekannten Anlagen kann vorteilhaft jedoch auch so
verfahren werden, daß im Störungsfall die Wärmezufuhr so
stark gedrosselt wird, daß sich eine noch unter dem zweiten
Sollwert liegende Stütztemperatur einstellt. In diesem Fall
ist es zweckmäßig, die für den Störungsfall vorgesehenen Maßnahmen auch während der Nachtabsenkung bzw. der Betriebsintervalle mit dem abgesenkten zweiten Sollwert der Raumtemperatur
wirksam werden zu lassen.

Die zur Auslösung des Zeitsignals programmierte Sollwertabweichung der Raumtemperatur kann größer als die Schalthysterese
des die Raumtemperatur überwachenden Raumthermostaten sein,
sodaß dieser mit weiteren Schaltkontakten zu versehen ist oder
aber ein weiterer Thermostat eingesetzt werden muß.

Eine Vereinfachung der Temperaturüberwachungsmittel ergibt sich,
wenn gemäß Anspruch 3 das Zeitsignal bei jedem Abfall der
Raumtemperatur auf den unteren Ansprechwert des Raumthermostaten gesetzt wird. Die Löschung des Zeitsignals kann in
diesem Fall bei Überschreiten dieses Temperaturwertes oder
bei Erreichen des oberen Ansprechwertes des Raumthermostaten
erfolgen.

Der erfindungsgemäße Vorschlag wirkt sich im Störungsfall besonders bei solchen Anlagen energiesparend aus, bei denen beim
vorprogrammierten Einschalten die Anlage mit voller Nennleistung
bis zum Erreichen des Sollwertes der Raumtemperatur hochge-

...

heizt wird (Schnellaufheizung). In diesem Fall kann das Zeitsignal bereits beim Einschalten der Anlage, z. B. nach Beendigung
der Nachtabsenkung, gesetzt und bei Bemessung der Länge des Zeitsignals die für die Aufheizung notwendige Zeitspanne berücksichigt
werden.

Bei Anlagen, bei denen diese Zeitspanne durch einen alle
die Wärmebilanz beeinflußende Faktoren erfassenden Rechner
vorausberechnet und der Einschaltzeitpunkt gegenüber einem
vorprogrammierten Zeitpunkt um die errechnete Zeitspanne selbsttätig vorverlegt wird, kann das Zeitsignal auch zum vorprogrammierten Zeitpunkt gesetzt werden.

Besonders vorteilhaft ist es wenn nach Anspruch 5 eine Drosselung der Wärmezufuhr im Störungsfall optisch und/oder akustisch
angezeigt wird.

Zeichnung

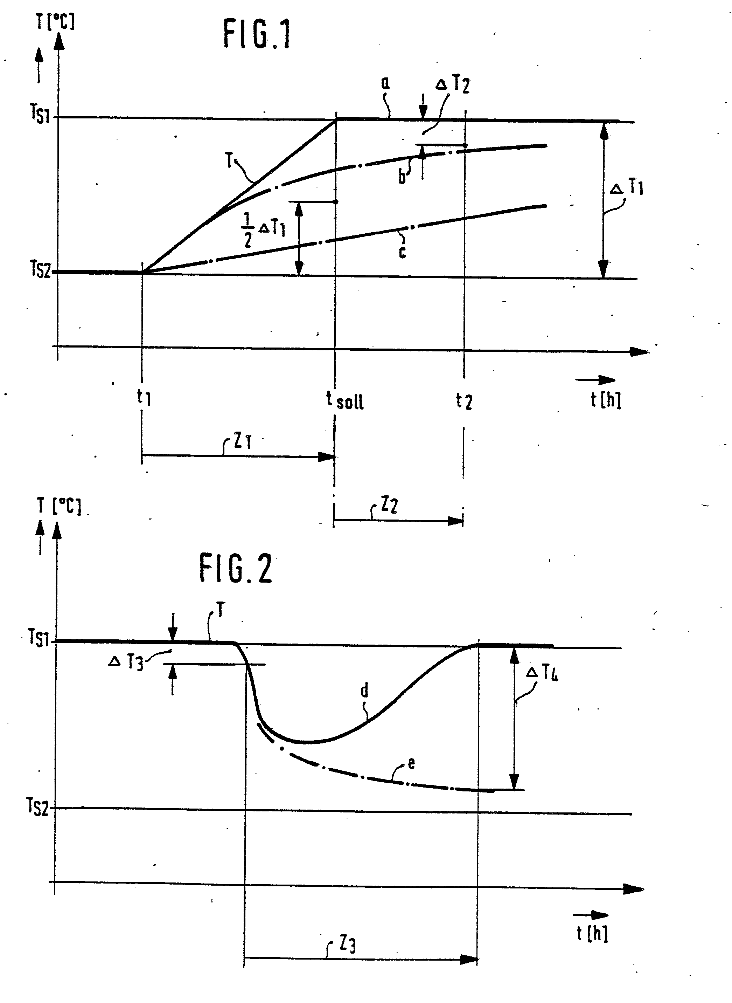

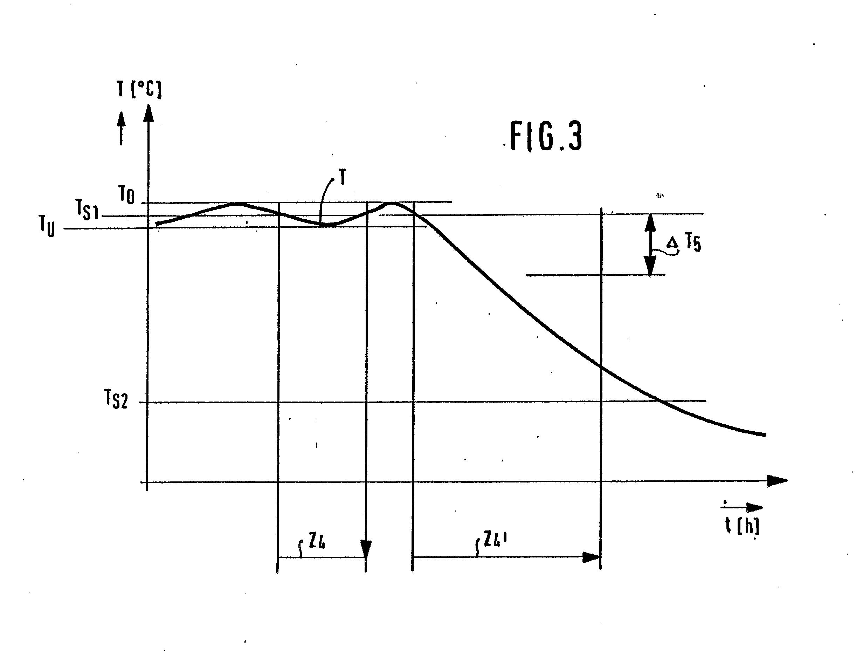

Die vorstehenden Erläuterungen des erfindungsgemäßen Verfahrens
sollen nachfolgend anhand der in der Zeichnung dargestellten
Funktionsschaubilder ergänzt werden. Es zeigen Figur 1 den
Verlauf der Raumtemperatur T über der Zeit t bei einer Anlage
mit sogenannter Schnellaufheizung, Figur 2 den Verlauf der
Raumtemperatur T im normalen Tages-Heizbetrieb und Figur 3
den Temperaturverlauf beim Auftreten einer Störung, jeweils
über der Zeit t aufgetragen.

Bei der Schnellaufheizung nach Figur 1 wird die Heizung zum
Zeitpunkt $t_1$ eingeschaltet, wobei eine Heizungsoptimierung
gewährleistet, daß die Temperatur zu dem vorprogrammierten
Zeitpunkt $t_{Soll}$ von einem Sollwert $T_{S2}$ um den Betrag $T_1$
auf den Tages-Sollwert $T_{S1}$ angestiegen ist. Bei störungsfreiem
Betrieb entspricht der Temperaturverlauf der im Figur 1 voll
ausgezogenen Linie a. Tritt jedoch eine der eingangs beschriebenen
Störungen auf und steigt die Temperatur deshalb nur zögernd nach
strichpunktierten Linien b oder c an, ohne den vorgeschriebenen
Sollwert $T_{S1}$ zu erreichen, so würde die Anlage unter erheblicher
Energieverschwendung auf Schnellaufheizung stehen bleiben, wenn
die erfindungsgemäßen Maßnahmen zur Erkennung dieses Zustandes
nicht vorgesehen würden.

...

Diese Maßnahmen können einmal darin bestehen, zum Zeitpunkt $t_1$ das Zeitsignal $z_1$ zu setzen, dessen Länge der vorausberechneten Aufheizzeit $t_{Soll} - t_1$ entspricht; und zum Zeitpunkt $t_{Soll}$ zu fragen, ob die Raumtemperatur T schon mindestens um die halbe Temperaturdifferenz T1 angestiegen ist. Wenn dies nicht der Fall ist, wird Störfall unterstellt, die Wärmezufuhr gedrosselt und gegebenenfalls ein optisches oder ein akustisches Signal ausgelöst.

Eine andere Maßnahme zum Erkennen einer Störung besteht darin, zum vorprogrammierten Zeitpunkt $t_{Soll}$ das Zeitsignal $z_2$ zu setzten, dessen Länge willkürlich vorgegeben ist, z.B. eine Stunde, und nach Ablauf des Zeitsignals $z_2$ zu fragen, ob die Differenz der Raumtemperatur zum Sollwert $T_{S1}$ kleiner als ein vorgegebener Wert $T_2$ ist. Bei negativem Ergebnis werden wieder die vorstehend beschriebenen Maßnahmen für einen Sparbetrieb der Anlage ausgelöst. In manchen Fällen kann es auch vorteilhaft sein, beide beschriebenen Abfragen vorzunehmen, um dem durch die Linie c versinnbildlichten Störverlauf der Temperatur möglichst frühzeitig Rechnung zu tragen.

Das Schaubild nach Figur 2 stellt den Fall dar, daß im normalen Tages-Heizbetrieb die Raumtemperatur T durch eine Störung unter den Tages-Sollwert $T_{S1}$ sinkt. Wenn die Störung durch normales, kontrolliertes Lüften hervorgerufen ist, entspricht der Temperaturverlauf der Linie d, welche in angemessener Zeit nach Beendigung des Lüftens den Sollwert $T_{S1}$ wieder erreicht. Beruht der Temperatureinbruch jedoch auf einer echten, unbeabsichtigten und daher vom Benutzer nicht kontrollierten Störung, dann solle wie angenommen die Raumtemperatur T nach der strichpunktierten Linie c ohne zeitliche Begrenzung nach unten abfallen. Auch dieser Störfall kann auch eindeutig erkannt werden, wenn erfindungsgemäß bei Abfall der Raumtemperatur T um einen vorgegebenen Wert $T_3$ ein Zeitsignal $z_3$ vorbestimmter Länge gesetzt und nach Ablauf dieses Zeitsignales die Temperaturdifferenz $T_4$ zwischen Ist- und Sollwert der Raumtemperatur abgefragt und ausgewertet wird. Die Länge des Zeitsignals $z_3$ ist auf die Heizungsanlage und die Gepflogenheiten der Benutzer bezüglich der Lüftung und der beheizten Räume abzustellen.

...

In den Figuren 1 und 2 ist der Tages-Sollwert $T_{S1}$ der Raumtemperatur bei störungsfreiem Betrieb der Einfachheit halber
als Gerade dargestellt. Tatsächlich schwankt dieser Wert wegen
der Trägheit des Regelungssystems um den Sollwert $T_{S1}$ als Mittelwert, wie es im Schaubild nach Figur 3 dargestellt ist. Dieser
Umstand kann dazu benutzt werden, bei jedem Unterschreiten der
Solltemperatur $T_{S1}$ ein Zeitsignal $z_4$ zu setzen und dieses beim
Überschreiten der Solltemperatur $T_{S1}$ wieder zu löschen. Die
Länge des Zeitsignals $z_4$ ist so bemessen, daß im störungsfreien
Betrieb die Löschung bereits vor dem normalen Ablauf des Zeitsignales erfolgt, sodaß eine Drosselung der Wärmezufuhr nicht
stattfindet. Dieser Fall ist in Figur 3 beim linken Zeitsignal
$z_4$ dargestellt. Bei einer unbeabsichtigten Störung stellt sich
der in Figur 3 rechts dargestellte Verlauf ein, bei welchem das
Zeitsignal $z_4$ vor seinem normalen Ablauf nicht gelöscht wird.
Am Ende des Zeitsignals wird die Abfrage gestellt, ob die
Differenz zwischen Ist- und Sollwert der Raumtemperatur größer
als ein vorgegebener Wert $T_5$ ist. Wenn dies - wie dargestellt -
der Fall ist, wird eine Störung unterstellt und die Anlage auf
Sparbetrieb geschaltet.

Anstelle der Solltemperatur $T_{S1}$ könnte beim Verfahren nach
Figur 3 auch der mit $T_u$ bezeichnete untere Ansprechwert des die Raumtemperatur regelnden Thermostaten zum Auslösen der Zeitsignale
$z_4$ herangezogen werden. Zum Löschen der Zeitsignale $z_4$ könnte
in diesem Fall sinngemäß der obere Ansprechwert $T_o$ des Thermostaten dienen.

R.

23.2.1981 Ki/Le

ROBERT BOSCH GMBH, 7000 STUTTGART 1

## Verfahren zum Regeln bzw. Steuern einer Heizungsanlage

Ansprüche

1. Verfahren zum Regeln bzw. Steuern von Heizungsanlagen, bei welchem durch Beeinflussen der Wärmezufuhr die Raumtemperatur auf einen Sollwert gehalten und zum Zweck der Energieeinsparung zeitweise unter den Sollwert abgesenkt wird, dadurch gekennzeichnet, daß die Wärmezufuhr gedrosselt wird, wenn die Raum-Temperatur $(T)$ eine bestimmte Zeit nach dem Einschalten der Anlage und/oder im normalen Heizbetrieb eine bestimmte Zeit nach Beginn eines nicht vorprogrammierten Unterschreitens des Sollwertes einen gegebenen Mindestwert nicht erreicht hat bzw. um mehr als einen vorgegebenen Differenzbetrag unter dem Sollwert liegt.

2. Verfahren nach Anspruch 1, bei welchem die Raumtemperatur in Belegungszeitintervallen (Tagbetrieb) auf einem ersten Sollwert $(T_{S1})$ und in Zeitintervallen ohne Belegung (Nachtbetrieb) abgesenkt auf einem zweiten Sollwert $(T_{S2})$ gehalten

. . .

wird, dadurch gekennzeichnet, daß in den Belegungszeitintervallen die Wärmezufuhr auf einen höchstens dem zweiten
Sollwert ($T_{S2}$) entsprechenden verminderten Wärmebedarf abgesenkt wird, wenn die Raum-Temperatur (T) eine bestimmte Zeit
nach einem nicht vorprogrammierten Unterschreiten des ersten
Sollwertes ($T_{S1}$) um einen vorgegebenen Differenzbetrag unter
dem ersten Sollwert liegt.

3. Verfahren nach Anspruch 1 oder 2, bei welchem der Sollwert
der Raumtemperatur durch einen Thermostaten geregelt wird, dadurch gekennzeichnet, daß bei jedem Abfall der Raumtemperatur
unter den Sollwert der Raumtemperatur oder den unteren Ansprechwert ($T_u$) des Thermostaten ein Zeitsignal ($z_4$) gesetzt
wird, bei dessen Ablauf die die Drosselung der Wärmezufuhr
gegebenenfalls auslösende Abfrage nach dem Istwert der Raumtemperatur erfolgt.(Figur 3).

4. Verfahren nach einem der vorhergehenden Ansprüche, bei
welchem beim vorprogrammierten Einschalten die Anlage mit
voller Nennleistung bis zum Erreichen des Sollwertes der
Raumtemperatur hochgeheizt wird, dadurch gekennzeichnet, daß
das Zeitsignal ($\bar{z}_1$, $z_2$) für die die Drosselung der Wärmezufuhr gegebenenfalls auslösende Abfrage des Istwertes der Raumtemperatur (T) gesetzt wird beim Einschalten der Anlage bzw.
beim Erreichen der Solltemperatur, wobei im letzteren Fall
ein Optimierungsrechner unter Berücksichtigung der die Aufheizgeschwindigkeit beeinflussenden Faktoren die Zeit zwischen
Einschalten und Erreichen der Solltemperatur vorausberechnet.

...

5. Verfahren nach einem der vorhergehenden Ansprüche, dadurch gekennzeichnet, daß eine Drosselung der Wärmezufuhr im Störungsfall optisch und/oder akustisch angezeigt wird.

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | GB-A-2 019 046 (PHILIPS') *Zusammenfassung; Seite 3, Zeilen 29-83; Abbildung 5* | 1 | G 05 D 23/19<br>F 24 D 19/10 |
| | --- | | |
| A | FR-A-2 281 548 (S.HEDLY) *Seite 6, Zeilen 1 bis 25; Abbildung 1* & DE - A - 2 534 829 | 1,5 | |
| | ----- | | |

RECHERCHIERTE SACHGEBIETE (Int. Cl. 3)

G 05 D
F 24 D

Der vorliegende Recherchenbericht wurde für alle Patentansprüche erstellt.

| Recherchenort | Abschlußdatum der Recherche | Prüfer |
|---|---|---|
| DEN HAAG | 02-09-1982 | HELOT H.V. |